# FASCICULE DE BREVET EUROPEEN

(11) **EP 1 188 588 B1**
(45) Date de publication et mention de la délivrance du brevet: **26.06.2002**
(21) Numéro de dépôt: 00870176.5
(22) Date de dépôt: 11.08.2000
(51) Int. Cl.: B60G 17/015, B62D 65/00

(54) **Suspension complémentaire pour voiture blindée**
Ergänzende Federung für gepanzerte Fahrzeuge
Supplementing suspension for armoured vehicle

(30) Priorité: 19.06.2000 US 212836 P
(43) Date de publication de la demande: 20.03.2002
(73) Titulaire: S.A. CARAT DUCHATELET, 4020 Liege (BE)
(72) Inventeur: S.A. CARAT DUCHATELET, 4020 Liege (BE)
(74) Mandataire: Van Malderen, Michel

(56) Documents cités:
- WO-A-91/11339
- DE-A- 19 608 999
- FR-A- 2 641 503
- FR-A- 2 723 344

## Description

### Objet de l'invention

La présente invention se rapporte à un nouveau système de suspension pour véhicules automobiles de série ayant subi des transformations, telles que la pose de blindage, dont la conséquence est une augmentation de la charge pondérale desdits véhicules.

En particulier, l'invention concerne une suspension modifiée pour automobile blindée dont la suspension d'origine est une suspension active.

### Arrière-plan technologique et état de la technique

La suspension d'une automobile a pour fonction de maintenir le contact entre le sol et les roues afin de garantir au conducteur le contrôle de la vitesse et de la direction de son véhicule. Elle doit remplir cette fonction en procurant un maximum de confort pour les passagers et en préservant les composants de la voiture par l'absorption en douceur des irrégularités de la route.

De plus, afin de garantir de bonnes performances en tenue de route, la suspension doit, dans la mesure du possible, maintenir l'assiette du véhicule, c'est-à-dire limiter au maximum respectivement le roulis et le tangage lors du virage et lors du freinage et de l'accélération.

Afin de répondre à ces différentes exigences, la suspension d'une voiture moderne se compose principalement des différents éléments suivants :
- des liaisons articulées entre les roues et le châssis afin de permettre un débattement des roues par rapport à celui-ci ;
- des ressorts afin de supporter la voiture et de pousser en permanence les roues vers le sol ;
- des amortisseurs afin de dissiper l'énergie emmagasinée dans les ressorts lors de leur compression ou leur détente et qui tend à faire rebondir ceux-ci.

De plus, la suspension peut comprendre un système anti-roulis, qui est le plus souvent un système de barres de torsion reliant les roues gauche et droite d'un même essieu et générant une force réactive lorsque le débattement de la suspension est différent à gauche et à droite.

Les systèmes classiques, aujourd'hui encore les plus répandus, sont des systèmes passifs présentant toujours les mêmes caractéristiques de réponse. Toutefois, des systèmes plus évolués appelés "suspensions actives" ont été développés.

Une suspension active est un dispositif permettant un contrôle actif de la suspension, en stabilisant le véhicule et en adaptant sa suspension, en particulier son amortissement, à l'état de la route ou aux conditions de conduite, par l'utilisation de moyens de pression et d'amortissement connus en soi, qui peuvent être par exemple hydrauliques ou électromagnétiques. A tout instant, ces moyens fournissent des forces contrecarrant les forces d'inertie appliquées au châssis ou les forces extérieures transmises par la surface de la route.

Ce dispositif fait appel à une gestion, généralement par régulation électronique, résultant de l'analyse de différents paramètres mesurés par des capteurs de position ou d'accélération, afin, par exemple, de garantir toujours le meilleur compromis entre confort et tenue de route, ou encore de maintenir l'assiette en toutes circonstances, ou même, plus simplement, de maintenir la garde au sol malgré les variations de charge.

La masse totale du véhicule est dans tous les cas un paramètre prépondérant. Alors que, dans le cas d'une suspension passive classique, il suffit d'adapter la force des ressorts et les courbes d'amortissement, le cas d'une suspension active est plus complexe puisque, si les caractéristiques des ressorts et amortisseurs sont modifiées, les algorithmes de gestion de la suspension doivent également être modifiés en conséquence. Il en va de même des paramètres de contrôle du système dans le cas de plus en plus courant de diagnostic embarqué.

Afin de pallier aux inconvénients de la surcharge pondérale fournie par le blindage, il vient donc immédiatement à l'esprit de l'homme de l'art de proposer le renforcement des éléments actifs d'origine, par exemple des ressorts pneumatiques, au niveau de leur dimensionnement, combiné à des modifications adéquates du système de gestion.

Le Demandeur a imaginé, dans le cadre de son activité de blindage de berlines de grand luxe, une solution alternative à ce problème consistant en une suspension additionnelle à la suspension d'origine, sans modification de cette suspension d'origine proprement dite, ayant pour but de masquer vis-à-vis du système de gestion active la surcharge de masse résultant du blindage.

### Buts de l'invention

La présente invention vise à fournir un nouveau système de suspension active pour véhicule automobile présentant une surcharge pondérale permanente ou temporaire, en particulier pour véhicule automobile blindé.

L'invention a pour but complémentaire de masquer la surcharge résultant du blindage vis-à-vis de la suspension active d'origine du véhicule et ainsi de permettre d'une part la conservation des caractéristiques des composants physiques de ladite suspension d'origine et préserver d'autre part son fonctionnement sans nécessité de changement des algorithmes ou des paramètres de contrôle.

Enfin, la suspension de l'invention doit procurer la force nécessaire au support de la charge de blindage et l'amortissement nécessaire à son contrôle dynamique dans la meilleure harmonie possible avec le système de suspension d'origine de la voiture, qui reste incorporé au dispositif selon l'invention.

### Résumé de l'invention

La présente invention se rapporte à un nouveau système de suspension active pour véhicule automobile, de préférence fabriqué en série, pourvu d'une surcharge de masse permanente, telle que des éléments de blindage, ou temporaire par rapport à sa masse d'origine, muni d'une suspension active d'origine, ladite suspension active comprenant des moyens de contrôle permettant la stabilisation dudit véhicule et l'adaptation de ladite suspension aux conditions de conduite et à l'état de la route, caractérisé en ce qu'il comprend en outre des moyens de suspension passifs additionnels situés au niveau de chaque roue sur au moins un essieu et tels que ladite surcharge de masse est masquée par rapport aux dits moyens de contrôle, en manière telle que lesdits moyens de contrôle remplissent leur fonction de manière similaire à celle des conditions d'origine.

On entend par masquage de ladite surcharge de masse par rapport aux moyens de contrôle le fait que les moyens de suspension passifs additionnels permettent une répartition de la masse totale du véhicule, par une "reprise" de la masse excédentaire, telle que les éléments de la suspension active d'origine ne supportent qu'une partie de cette masse totale, correspondant sensiblement à la masse d'origine. Ainsi, dans le véhicule modifié, les moyens de contrôle agissent spécifiquement sur la suspension d'origine, laquelle supporte virtuellement une masse équivalente à la masse d'origine.

Selon une forme de réalisation particulière du dispositif de l'invention, lesdits moyens de suspension passifs additionnels comprennent des ressorts hélicoïdaux, des barres de torsion, des ressorts pneumatiques ou des ressorts à lames, ainsi que des amortisseurs disposés le long des jambes de suspension d'origine.

Avantageusement, les barres de torsion sont respectivement situées transversalement et montées sur le berceau du train, à l'avant et longitudinalement et montées sur la coque, à l'arrière.

A chaque roue, le débattement de suspension est de préférence transmis à la barre de torsion, à l'avant par au moins une biellette liée au bras inférieur de suspension et à l'arrière par le montage direct de la partie mobile sur ledit bras inférieur.

De manière particulièrement avantageuse, chaque amortisseur additionnel est fixé dans la joue d'aile correspondante du véhicule et attaché au bras inférieur de suspension correspondant de préférence au travers de ladite biellette à l'avant et directement à l'arrière.

En outre, le dispositif de l'invention comporte de préférence au moins une barre antiroulis.

Toujours selon l'invention, les caractéristiques des composants physiques de ladite suspension active d'origine sont conservées, de même que les algorithmes et les paramètres de contrôle de ladite suspension active d'origine.

En service, le système de suspension active selon l'invention est incorporée de préférence à un véhicule automobile blindé..

### Brève description des figures

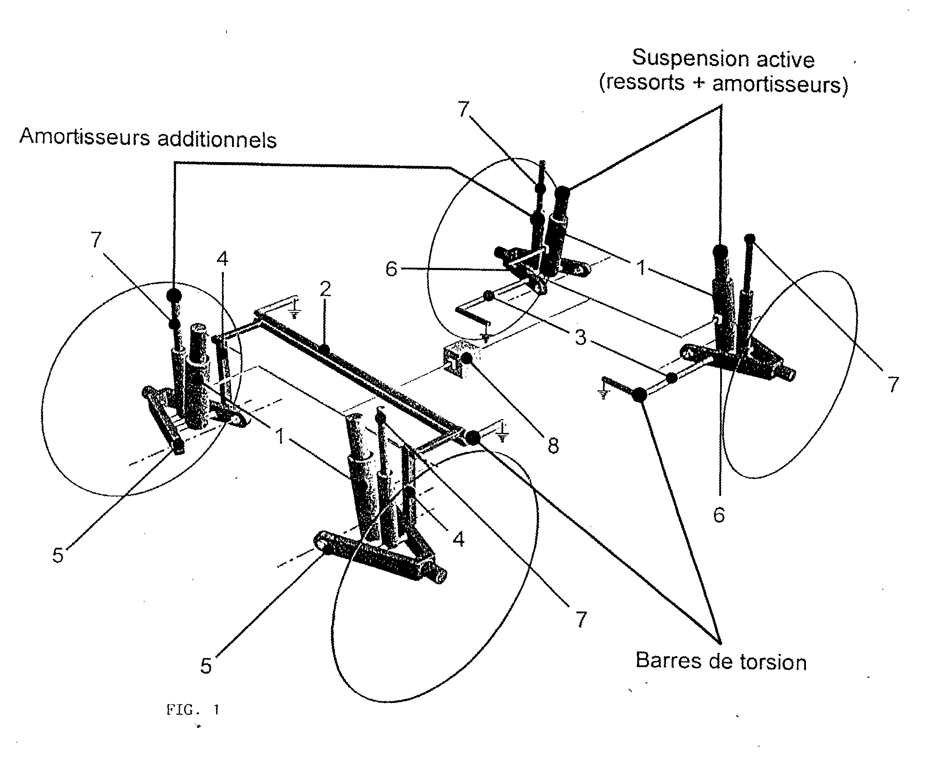

La figure 1 représente une vue très schématique en perspective d'un véhicule muni du dispositif de suspension active modifié selon la présente invention.

### Description d'une forme d'exécution préférée de l'invention

Une forme d'exécution préférée de l'invention, représentée schématiquement à la figure 1, a été réalisée sur un véhicule de type Mercedes® Classe S Série W220. Ce véhicule présente d'origine une suspension active 1 par ressorts pneumatiques à pression variable et amortissement adaptatif, au niveau de chaque roue. Un système de gestion électronique 8 par microprocesseur ou microcontrôleur est relié à des capteurs situés au niveau des organes de suspension 1 et à des actionneurs agissant sur ceux-ci. Ledit véhicule a subi, après fabrication, des transformations en vue d'en assurer le blindage, correspondant à une surcharge de masse de l'ordre d'une à 1,5 tonne.

Les modifications se présentent comme suit :
- des ressorts supportant l'excédent de masse se présentent sous la forme de barres de torsion 2,3 avec pré-charge réglable. Ces barres de torsion sont respectivement situées transversalement et montées sur le berceau du train, à l'avant et situées longitudinalement et montées sur la coque, à l'arrière. L'ancrage au châssis de ces barres de torsion 2,3 est représenté à la figure 1 par des symboles de "mise à la masse". Le débattement de suspension est transmis à la barre de torsion 2 à l'avant par un système de biellettes 4 liées au bras inférieur de suspension 5 et à l'arrière par le montage direct de la partie mobile 3 sur le bras inférieur 6 ;
- des amortisseurs additionnels 7 contrôlant le mouvement des masses de blindage sont situés le long des jambes de suspension d'origine 1 et sont fixés dans les joues d'aile (non représenté) et attachés aux bras inférieurs 5,6, éventuellement au travers du système de biellettes 4 à l'avant et directement à l'arrière ;
- la barre antiroulis avant d'origine est remplacée par une barre de géométrie et de dimensions différentes (non représentée).

La solution proposée par la présente invention se présente comme une alternative avantageuse à celle, retenue dans ce cas précis par le constructeur, où le véhicule présente par exemple un renforcement de la suspension d'origine, à l'avant, par des ressorts pneumatiques modifiés et, à l'arrière, par des ressorts pneumatiques modifiés, doublés de ressorts hélicoïdaux classiques.

La suspension proposée par l'invention permet d'éviter des pressions trop élevées dans les ressorts pneumatiques d'origine et empêche ainsi la voiture de s'affaisser sous la charge du blindage. Elle procure un contrôle dynamique tel que les qualités de confort et de tenue de route sont préservées malgré les masses sensiblement plus élevées et permet au système de contrôles actifs de la voiture de fonctionner normalement, via un maintien de hauteur de caisse et un amortissement adaptatif.

En outre, le système est transposable moyennant quelques modifications dans la disposition des composants d'origine à la Mercedes Classe S W220 à suspension par ressorts hélicoïdaux et amortissement passif avec contrôle d'assiette actif par vérins hydrauliques (système ABC).

## Revendications

1. Système de suspension active pour véhicule automobile, de préférence fabriqué en série, pourvu d'une surcharge de masse permanente, telle que des éléments de blindage, ou temporaire par rapport à sa masse d'origine, muni d'une suspension active d'origine (1), ladite suspension active comprenant des moyens de contrôle (8) permettant la stabilisation dudit véhicule et l'adaptation de ladite suspension aux conditions de conduite et à l'état de la route, **caractérisé en ce qu'**il comprend en outre des moyens de suspension passifs additionnels (2,3,4,7) situés au niveau de chaque roue sur au moins un essieu et tels que ladite surcharge de masse est masquée par rapport aux dits moyens de contrôle, en manière telle que lesdits moyens de contrôle remplissent leur fonction de manière similaire à celle des conditions d'origine.

2. Système selon la revendication 1, **caractérisé en ce que** lesdits moyens de suspension passifs additionnels comprennent des ressorts hélicoïdaux, des barres de torsion, des ressorts pneumatiques ou des ressorts à lames (2,3).

3. Système selon la revendication 1 ou 2, **caractérisé en ce que** lesdits moyens de suspension passifs additionnels comprennent des amortisseurs (7) disposés le long des jambes de suspension d'origine.

4. Système selon la revendication 2, **caractérisé en ce que** les barres de torsion sont respectivement situées transversalement et montées sur le berceau du train, à l'avant (2) et longitudinalement et montées sur la coque, à l'arrière (3).

5. Système selon la revendication 2 ou 4, **caractérisé en ce qu'**à chaque roue, le débattement de suspension est transmis à la barre de torsion (2,3), à l'avant par au moins une biellette (4) liée au bras inférieur de suspension (5) et à l'arrière par le montage direct de la partie mobile (3) sur ledit bras inférieur (6).

6. Système selon la revendication 3, **caractérisé en ce que** chaque amortisseur additionnel (7) est fixé dans la joue d'aile correspondante du véhicule et attaché au bras inférieur de suspension (5,6) correspondant de préférence au travers de ladite biellette (4) à l'avant et directement à l'arrière.

7. Système selon l'une quelconque des revendications précédentes, **caractérisé en ce qu'**il comporte au moins une barre antiroulis.

8. Système selon l'une quelconque des revendications précédentes, **caractérisé en ce que** caractéristiques des composants physiques de ladite suspension active d'origine sont conservées.

9. Système selon l'une quelconque des revendications précédentes, **caractérisé en ce que** les algorithmes et les paramètres de contrôle de ladite suspension active d'origine sont conservés.

10. Véhicule automobile blindé équipé d'un système de suspension active selon l'une quelconque des revendications précédentes.

## Patentansprüche

1. Vorrichtung zur aktiven Aufhängung für Kraftfahrzeuge, die vorzugsweise in Serie hergestellt werden und die eine permanente Überlastung an Masse, wie etwa Panzerungselemente, oder eine zeitweilige Überlastung in Bezug auf die Ausgangsmasse aufweisen, Vorrichtung die mit einer aktiven ursprünglichen Aufhängung (1) ausgestattet ist, wobei die aktive Aufhängung Steuerungsmittel (8) enthält, welche die Stabilisierung des Fahrzeuges und die Anpassung der Aufhängung an die Fahrbedingungen und an den Zustand der Straße erlauben, **dadurch gekennzeichnet, dass** sie ferner zusätzliche Mittel einer passiven Aufhängung (2, 3, 4, 7) aufweist, welche auf der Höhe eines jeden Rades an mindestens einer Achse angeordnet sind und welche so ausgelegt sind, dass die besagte Überlastung an Masse gegenüber den Steuerungsmitteln (8) auf eine derartige Weise maskiert ist, dass die Steuerungsmittel ihre Funktion auf eine Art und Weise erfüllen, die ähnliche ist wie diejenige der Ausgangsbedingungen.

2. Vorrichtung gemäß Anspruch 1, **dadurch gekennzeichnet, dass** die zusätzlichen Mittel einer passiven Aufhängung zylindrische Schraubenfedern, Torsionsstäbe, pneumatische Federn oder Blattfedern (2, 3) aufweisen.

3. Vorrichtung gemäß Anspruch 1 oder 2, **dadurch gekennzeichnet, dass** die besagten zusätzlichen Mittel einer passiven Aufhängung Stoßdämpfer (7) aufweisen, die entlang den ursprünglichen Aufhängungsstreben angeordnet sind.

4. Vorrichtung gemäß Anspruch 2, **dadurch gekennzeichnet, dass** die Torsionsstäbe jeweils transversal gelegen sind und vorne (2) sowie längsseitig an der Wiege des Fahrgestells montiert sind, und hinten (3) an der selbsttragenden Karosserie montiert sind

5. Vorrichtung gemäß Anspruch 2 oder 4, **dadurch gekennzeichnet, dass** an einem jeden Rad der Ausschlag der Aufhängung an den Torsionsstab (2, 3) übertragen wird, vorne durch mindestens einen Schwingarm (4), der an dem unteren Aufhängungsarm (5) befestigt ist, und hinten durch das direkte Montieren des beweglichen Teils (3) auf den unteren Arm (6).

6. Vorrichtung gemäß Anspruch 3, **dadurch gekennzeichnet, dass** jeder zusätzliche Stoßdämpfer (7) in der entsprechenden Seitenwange des Kotflügels des Fahrzeuges befestigt ist und an dem entsprechenden unteren Aufhängungsarm (5, 6) festgemacht ist, vorzugsweise über den Schwingarm (4) vorne und auf direkte Weise hinten

7. Vorrichtung gemäß irgendeinem der vorhergehenden Ansprüche, **dadurch gekennzeichnet, dass** sie mindestens einen Stabilisator umfasst.

8. Vorrichtung gemäß irgendeinem der vorhergehenden Ansprüche, **dadurch gekennzeichnet, dass** die Merkmale der physischen Komponenten der ursprünglichen aktiven Aufhängung beibehalten werden.

9. Vorrichtung gemäß irgendeinem der vorhergehenden Ansprüche, **dadurch gekennzeichnet, dass** die Algorithmen und die Steuerungsparameter der ursprünglichen aktiven Aufhängung beibehalten werden.

10. Gepanzertes Kraftfahrzeug, das mit einer aktiven Aufhängung gemäß irgendeinem der vorhergehenden Ansprüche ausgestattet ist.

## Claims

1. An active suspension device for automotive vehicle, preferably mass produced, provided with either a permanent mass overload, such as armoured members, or a temporary one in relation to the original mass thereof, with an original active suspension (1), said active suspension comprising control means (8) allowing for the stabilisation of said vehicle and the adaptation of said suspension to the driving conditions and to the road condition, **characterized in that** it further comprises additional passive suspension means (2,3,4,7) located at the level of each wheel on at least one axle and such that said mass overload is masked relative to said control means, so that said control means fulfil their function in a similar way as the original conditions.

2. A device according to claim 1, **characterized in that** said additional passive suspension means comprise coil springs, torsion bars, pneumatic springs or leaf springs (2,3).

3. A device according to claim 1 or 2, **characterized in that** said additional passive suspension means comprise shock absorbers (7) located along the original suspension legs.

4. A device according to claim 2, **characterized in that** the torsion bars are respectively located transversally and arranged on the axle craddle, at the front (2), and located longitudinally and arranged on the shell, at the rear (3).

5. A device according to claim 2 or 4,' **characterized in that**, at each wheel, the suspension clearance is transmitted to the torsion bar (2,3), at the front, by at least one small connecting rod (4) linked with the suspension lower arm (5) and, at the rear, by the direct assembly of the mobile part (3) on said lower arm (6).

6. A device according to claim 3, **characterized in that** each additional shock absorber (7) is secured in the corresponding wing cheek in the vehicle and secured to the corresponding suspension lower arm (5,6), preferably through said small connecting rod (4) at the front and directly at the rear.

7. A device according to any of preceding claims, **characterized in that** it comprises at least one anti-roll bar.

8. A device according to any of preceding claims, **characterized in that** the features of the physical composants in said original active suspension are maintained.

9. A device according to any of preceding claims, **characterized in that** the algorithms and the control parameters in said original active suspension are maintained.

10. An armoured automotive vehicle provided with an active suspension according to any of preceding claims.
